# EUROPEAN PATENT APPLICATION

(11) **EP 2 345 838 A1**
(43) Date of publication of application: **20.07.2011**
(21) Application number: 09830269.8
(22) Date of filing: 22.10.2009
(51) Int. Cl.: F21S 2/00, G02F 1/13357, F21Y 101/02, F21Y 103/00, F21Y 105/00

(54) **ILLUMINATING DEVICE AND DISPLAY DEVICE**

(30) Priority: 05.12.2008 JP 2008311035
(71) Applicant: Sharp Kabushiki Kaisha, Osaka-shi, Osaka 545-8522 (JP)
(72) Inventor: ISOBE, Hiroaki, Osaka 545-8522 (JP); SHIMOJOH, Kazuya, Osaka 545-8522 (JP)
(74) Representative: Müller-Boré & Partner Patentanwälte
(86) International application number: PCT/JP2009/068182
(87) International publication number: WO 2010/064501

(57) **Abstract**

A resin frame (2) is disposed on an emission surface (43) side of a light guide plate (4) through at least one optical sheet (3). A protrusion (25) facing an end surface (45) adjacent to the emission surface of the light guide plate is provided upright on the resin frame. The protrusion is elastically deformable towards the opposite side to the light guide plate where the protrusion faces. Since the protrusion elastically deforms to absorb the extension of the light guide plate, the light guide plate does not deform. Therefore, it is possible to prevent, for the long term, deformations of the light guide plate resulting from relative changes in the size of the light guide plate due to changes in temperature and humidity.

## Description

### Technical Field

The present invention relates to illuminating devices, and particularly to an illuminating device provided with a light guide plate. The present invention also relates to a display device provided with such an illuminating device.

### Background Art

In recent years, liquid crystal display devices have been used widely in television sets, monitors, mobile phones and the like because they have advantages such as being thin and lightweight over conventional cathode-ray tubes. Such liquid crystal display devices are provided with an illuminating device (backlight device) for emitting illumination light and a liquid crystal panel for displaying desired images by functioning as a shutter against the illumination light from the illuminating device.

The illuminating devices can be broadly divided into direct type and edge-light type depending on the arrangement of light sources relative to the liquid crystal panel. Edge-light type illuminating devices are generally used in, for example, mobile devices such as mobile phones, notebook PCs and PDAs because it is easier to reduce the thickness of edge-light type illuminating devices than that of direct type illuminating devices.

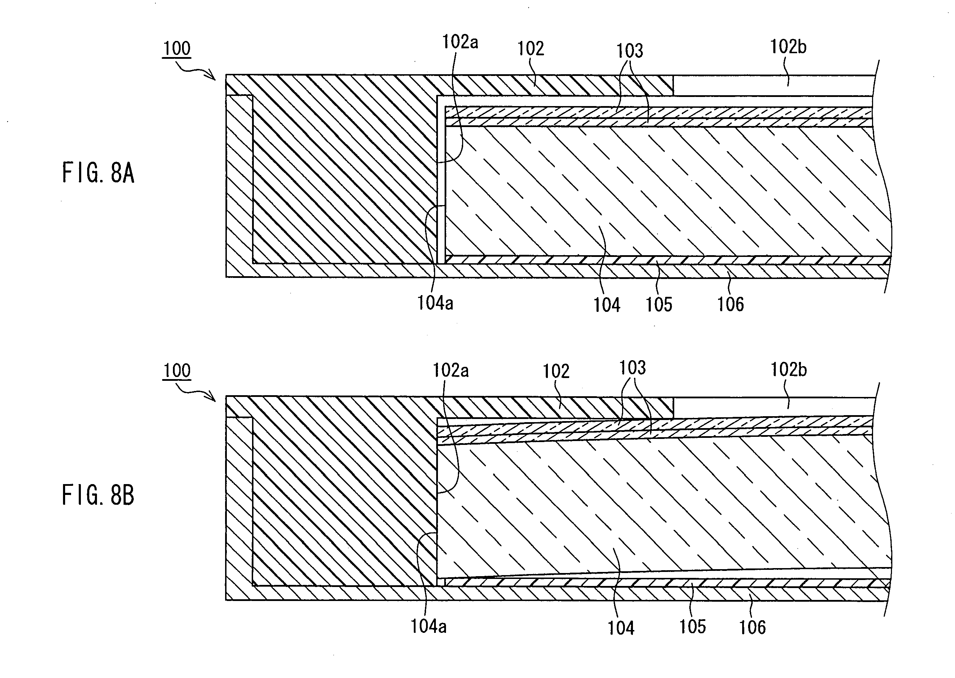

FIG. 8A is a partially enlarged cross-sectional view showing a schematic configuration of a conventional edge-light type illuminating device 100. In FIG. 8A, a resin frame 102, a plurality of optical sheets 103 including a diffusion sheet, a lens sheet and the like, a light guide plate 104, a reflection sheet 105, and a metal plate 106 are stacked in this order from the top. Alight source (not shown) is disposed facing an end surface of the light guide plate 104. The illuminating device 100 emits illumination light upward through an opening 102b formed in the resin frame 102. A liquid crystal panel is disposed on the top surface of the illuminating device 100, thus forming a liquid crystal display device.

Generally, the light guide plate 104 is made of an acrylic-based material and the resin frame 102 is made of a polycarbonate-based material. Since acrylic-based materials have larger thermal expansion coefficient and humidity expansion coefficient than polycarbonate-based materials, the light guide plate 104 extends significantly as compared with the resin frame 102 when the temperature and the humidity increase. The difference in extension between the light guide plate 104 and the resin frame 102 is particularly noticeable in the direction parallel to the principal surfaces of the light guide plate 104 (the horizontal direction of the sheet of FIG. 8A). However, since the resin frame 102 is provided with an inner circumferential wall 102a facing the end surface 104a of the light guide plate 104, when the light guide plate 104 extends significantly relative to the resin frame 102, the end surface 104a of the light guide plate 104 comes into contact with the inner circumferential wall 102a of the resin frame 102. Consequently, the light guide plate 104 becomes crinkled as shown in FIG. 8B, causing, to the illuminating device, unevenness in the luminance distribution, and, to the liquid crystal display device, display irregularities and thus deterioration of the display quality This problem becomes noticeable as the screen size becomes larger.

To solve this problem, a sufficient clearance for absorbing the difference in extension between the light guide plate 104 and the resin frame 102 may be set between the end surface 104a of the light guide plate 104 and the inner circumferential wall 102a of the resin frame 102. However, when the clearance is too large, due to the exerted acceleration when the illuminating device is moved, the light guide plate 104 moves within the resin frame 102, so that the end surface 104a and the inner circumferential wall 102a collide with each other, making rattling noise.

Patent Document 1 describes a method in which, in addition to setting a clearance between the end surface of the light guide plate and the inner circumferential wall of the resin frame so that the light guide plate can extend, the outer edge of the principal surfaces of the light guide plate and the resin frame are attached to each other with elastic or flexible double-faced tape.

### Prior art document

### Patent document

Patent Document 1: JP H6-342603

### Disclosure of Invention

### Problem to be Solved by the Invention

However, the method of Patent Document 1 involves the following problem. Since the adhesion of the double-faced tape declines due to heat and humidity or with the passage of time, the double-faced tape comes off from the light guide plate or the resin frame.

With the foregoing in mind, it is an object of the present invention to prevent, over the long term, deformations of a light guide plate resulting from the relative extension of the light guide plate due to changes in temperature and humidity. Further, it is an object of the present invention to prevent deterioration of display quality of a display device resulting from such deformations of the light guide plate.

### Means for Solving Problem

The illuminating device of the present invention includes: a light source; a light guide plate having an incident surface to which light from the light source is incident and an emission surface from which the light incident to the incident surface is emitted; a resin frame disposed on the emission surface side of the light guide plate and including an opening through which the light emitted from the emission surface passes; and at least one optical sheet disposed between the light guide plate and the resin frame. A protrusion facing an end surface of the light guide plate adjacent to the emission surface is provided upright on the resin frame, and the protrusion is elastically deformable towards the opposite side to the light guide plate.

Further, the display device of the present invention includes the illuminating device of the present invention.

### Effects of the Invention

According to the present invention, the protrusion elastically deforms to absorb the relative extension of the light guide plate. Thus, it is possible to solve the conventional problem that the light guide plate extends due to changes in temperature and humidity and becomes crinkled. Further, it is possible to prevent deterioration of display quality of the display device resulting from deformations of the light guide plate.

Since the protrusion is provided upright on the resin frame, the optical sheet can move freely between the light guide plate and the resin frame even if the light guide plate extends. Thus, it is possible to prevent deterioration of flatness of the optical sheet resulting from the extension of the optical sheet and to achieve an illuminating device capable of providing illumination light with consistently uniform luminance regardless of changes in temperature and humidity.

Furthermore, since the protrusion deforms within the range of elasticity, virtually no change will be caused to its properties. Accordingly, the above-described effects can be achieved stably for the long term.

### Brief description of the drawings

[FIG. 1] FIG. 1 is an exploded perspective view showing a schematic configuration of a liquid crystal display device according to Embodiment 1 of the present invention.
[FIG. 2] FIG. 2 is an enlarged perspective view of a portion II of a resin frame shown in FIG. 1.
[FIG. 3] FIG. 3 is a perspective view of the illuminating device according to Embodiment 1 of the present invention from the back side.
[FIG. 4] FIG. 4 is a partially enlarged cross-sectional view of the illuminating device according to Embodiment 1 of the present invention along the surface including the line IV IV in FIG. 3 and parallel to the thickness direction.
[FIG. 5] FIG. 5 is a partially enlarged cross-sectional view for explaining the action of a protrusion that is provided upright on the resin frame when the light guide plate extends relative to the resin frame in the illuminating device according to Embodiment 1 of the present invention.
[FIG. 6] FIG. 6 is a partially enlarged cross-section view for explaining the action of a protrusion that is provided upright on a back plate unlike in Embodiment 1 of the present invention.
[FIG. 7] FIG. 7 is a partially enlarged cross-sectional view of an illuminating device according to Embodiment 2 of the present invention along the surface parallel to the thickness direction.
[FIG. 8] FIG. 8A is a partially enlarged cross-sectional view showing a schematic configuration of a conventional edge-light type illuminating device, and FIG. 8B is a partially enlarged cross-sectional view showing a state where a light guide plate deforms due to changes in temperature and humidity in the illuminating device shown in FIG. 8A.

### Description of the Invention

In the illuminating device of the present invention, the protrusion is preferably molded integrally with the resin frame. Consequently, the number of components of the illuminating device and the number of man-hours needed to assemble the illuminating device do not increase due to providing the protrusion. For this reason, there will be virtually no increase in the cost of the illuminating device.

The protrusion is preferably provided upright parallel to the direction of the normal to the emission surface of the light guide plate. This enables to easily design a molding die used in molding the protrusion integrally with the resin frame.

When the height of the protrusion is H and the largest thickness of a root portion of the protrusion in the elastic deformation direction is T, T/H ≤ 0.3 is preferably satisfied. Since this makes the elastic coefficient with respect to the bending deformation of the protrusion small, it is possible to further reduce the deformation of the light guide plate itself when the light guide plate extends.

A supporting wall for limiting deformation of the protrusion is preferably formed on the opposite side to the light guide plate relative to the protrusion. Consequently, it is possible to prevent the breakage of the light guide plate.

An inclined surface inclined backward in the thickness direction of the light guide plate towards the emission surface is preferably formed on a part of the end surface of the light guide plate where the protrusion faces. Consequently, it is possible to further reduce the possibility of the optical sheet being sandwiched between the light guide plate and the resin frame when the light guide plate extends. Thus, deterioration of flatness of the optical sheet due to the extension of the optical sheet can be further prevented.

Hereinafter, the illuminating device and the display device of the present invention will be described by way of preferred embodiments. In the following, a case where the present invention is applied to a transmission type liquid crystal display device will be described by way of example. The drawings are illustrated conceptually so as to make the invention easily understandable, and the size of each portion illustrated in the drawings and the size ratio are not true to life.

### (Embodiment 1)

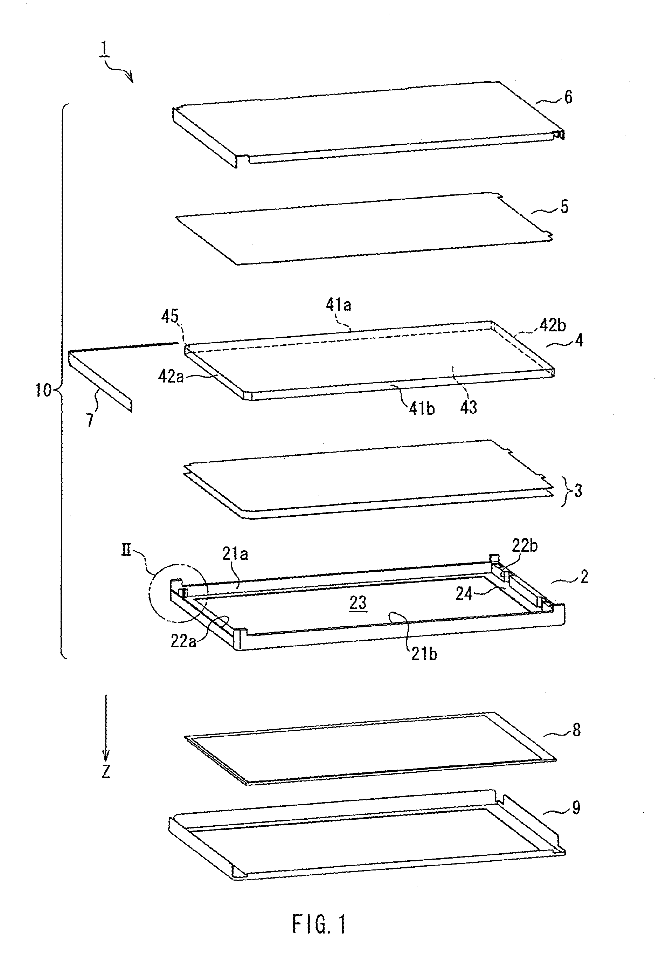

FIG. 1 is an exploded perspective view showing a schematic configuration of a liquid crystal display device 1 according to Embodiment 1 of the present invention. For convenience of the explanation below, an axis parallel to the thickness direction (the vertical direction of the sheet of FIG. 1) of the liquid crystal display device 1 will be referred to as a Z-axis. The direction of the arrow of the Z-axis indicates the viewer side of the liquid crystal display device 1.

The liquid crystal display device 1 includes a transmission type liquid crystal panel 8 as a display unit and an edge-light type illuminating device 10 disposed on the back side of the liquid crystal panel 8 to illuminate the liquid crystal panel 8.

The illuminating device 10 includes, from the liquid crystal panel 8 side, a resin frame 2, at least one optical sheet 3, a light guide plate 4, a reflection sheet 5, and a back plate 6 in this order along the Z-axis. The illuminating device 10 further includes a light source 7.

The light source 7 generates illumination light for illuminating the liquid crystal panel 8. For example, the light source 7 can be formed of a light-emitting source such as a discharge fluorescent tube (cold cathode fluorescent tube, hot cathode fluorescent tube, xenon fluorescent tube, etc.), LED, or EL element and a reflector for emitting light from the light-emitting source in a certain direction.

The light guide plate 4 is a substantially rectangular plate body made of a synthetic resin such as a transparent acrylic resin (e.g., PMMA). Circumferential surfaces of the light guide plate 4 connecting the front and back principal surfaces of the light guide plate 4 will be referred to as end surfaces. Of the end surfaces of the light guide plate 4, those along the long sides of the light guide plate 4 will be referred to as long side end surfaces 41a, 41b, and those along the short sides will be referred to as short side end surfaces 42a, 42b. The short side end surface 42a is an incident surface where the light source 7 faces and to which light from the light source 7 is incident. The light incident to the incident surface 42a is propagated while being totally reflected within the light guide plate 4 and is diffused. Then, the light is emitted from an emission surface 43 as the principal surface on the liquid crystal panel 8 side. Of the four corner portions of the light guide plate 4, the end surface at the corner portion present between the long side end surface 41a and the short side end surface 42a includes a contact surface 45 formed by chamfering. The contact surface 45 is substantially parallel to the Z-axis.

The reflection sheet 5 faces the principal surface of the light guide plate 4 opposite to the emission surface 43 and allows leakage light from the light guide plate 4 to reenter the light guide plate 4 to utilize the light effectively.

The optical sheet 3 is for turning light emitted from the emission surface 43 of the light guide plate 4 into illumination light with uniform luminance and is composed of at least one sheet such as a lens sheet or a diffusion sheet.

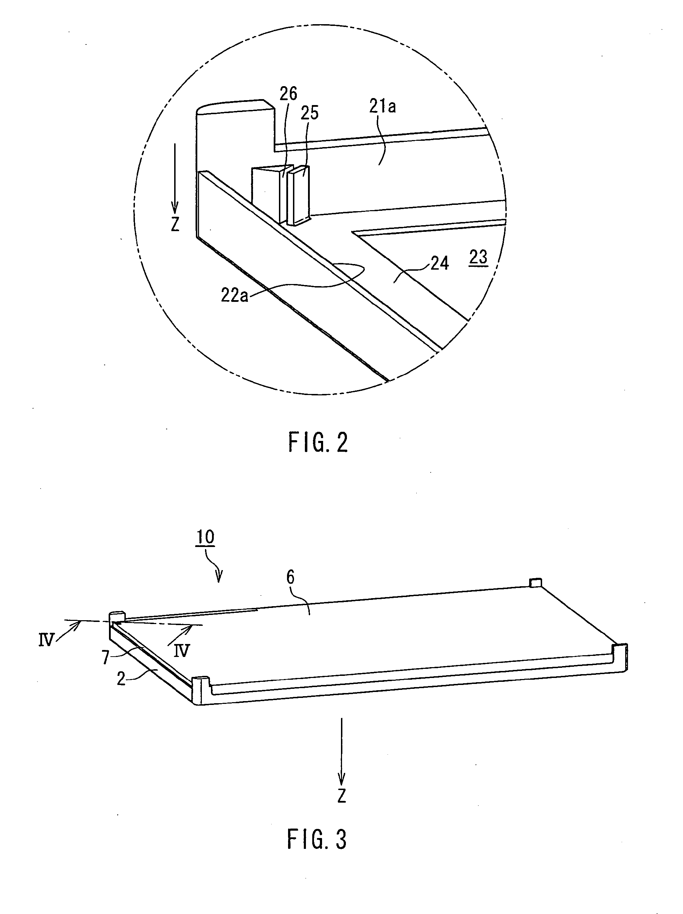

The resin frame 2 is a rectangular frame body including, at the center, an opening 23 through which light emitted from the emission surface 43 of the light guide plate 4 passes. The resin frame 2 includes a holding surface 24, a pair of long side inner circumferential walls 21a, 21b, and a pair of short side inner circumferential walls 22a, 22b. The holding surface 24 is an area surrounding the opening 23 and having a substantially voided square shape. The holding surface 24 is substantially perpendicular to the Z-axis. The pair of long side inner circumferential walls 21a, 21b and the pair of short side inner circumferential walls 22a, 22b are formed along the outer edge of the holding surface 24 and they are substantially parallel to the Z-axis. When the illuminating device 10 is assembled (see FIG. 3 discussed later), the emission surface 43 of the light guide plate 4 faces the holding surface 24, the long side end surfaces 41a, 41b of the light guide plate 4 face the long side inner circumferential walls 21a, 21b, respectively, and the short side end surfaces 42a, 42b of the light guide plate 4 face the short side inner circumferential walls 22a, 22b, respectively. The inner dimension between the long side inner circumferential walls 21a, 21b is larger than the outer dimension between the long side end surfaces 41a, 41b of the light guide plate 4. Further, the inner dimension between the short side inner circumferential walls 22a, 22b is larger than the outer dimension between the short side end surfaces 42a, 42b of the light guide plate 4. Such a resin frame 2 can be produced in one piece by injection molding using a synthetic resin material such as polycarbonate.

The back plate 6 can be produced by, for example, bending a metal plate.

The liquid crystal panel 8 includes a number of pixels and controls the passage of illumination light from the illuminating device 10 pixel by pixel. The configuration of the liquid crystal panel 8 is not particularly limited, and a known liquid crystal panel can be selected or modified as needed for the use as the liquid crystal panel 8. The liquid crystal panel 8 is fixed to the illuminating device 10 using a rectangular display frame 9.

FIG. 2 shows an enlarged perspective view of a portion II including, of the four corner portions of the resin frame 2, the corner portion to which the contact surface 45 of the light guide plate 4 corresponds. As shown in FIG. 2, a screen-like protrusion 25 substantially parallel to the Z-axis is provided upright on the holding surface 24 of the resin frame 2. Furthermore, a supporting wall 26 substantially parallel to the protrusion 25 is formed on, relative to the protrusion 25, the opposite side to the side on which the light guide plate 4 is disposed.

As shown in FIG. 1, by stacking the optical sheet 3, the light guide plate 4, and the reflection sheet 5 on the holding surface 24 of the resin frame 2 in this order, inserting the light source 7 between the short side inner circumferential wall 22a of the resin frame 2 and the short side end surface (incident surface) 42a of the light guide plate 4, and then fitting the resin frame 2 on the back plate 6, the illuminating device 10 shown in FIG. 3 is obtained.

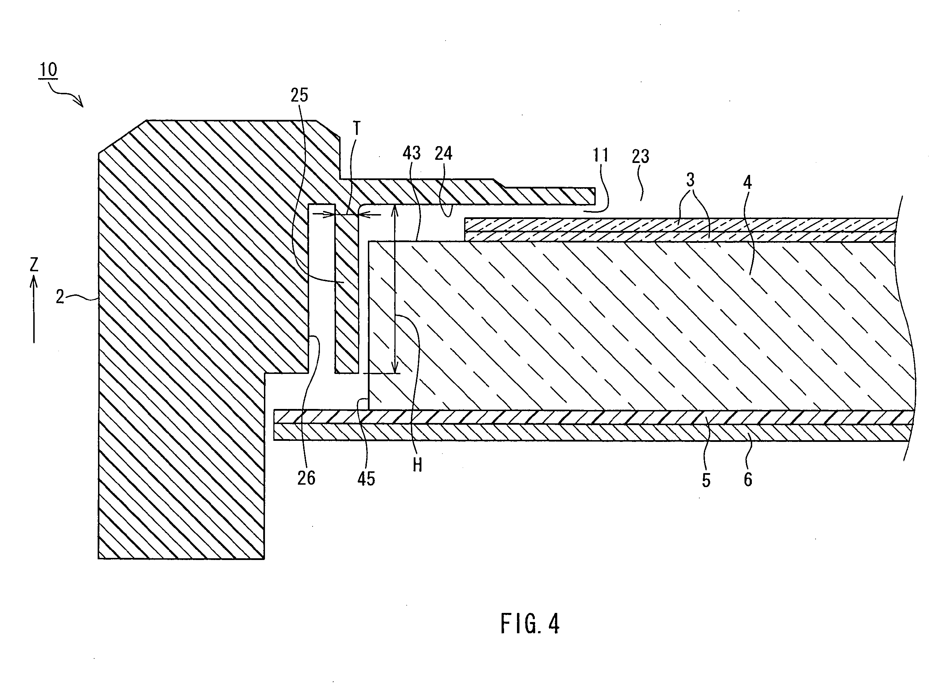

FIG. 4 is an enlarged cross-sectional view of the illuminating device 10 seen along the arrow direction and along the surface including the line IV-IV (the line parallel to a diagonal line connecting opposing corner portions) in FIG. 3 and parallel to the Z-axis. In FIG. 4, the side from which illumination light is emitted is illustrated on the upper side so that the drawing can be compared easily with FIGS. 8A and 8B showing the conventional illuminating device. The protrusion 25, which has a cantilever support structure and is provided upright on the holding surface 24 of the resin frame 2 towards the back plate 6, faces the contact surface 45 of the light guide plate 4. The optical sheet 3 and the light guide plate 4 are movable in the direction perpendicular to the Z-axis between the holding surface 42 of the resin frame 2 and the back plate 6. 1b achieve this, a slight clearance 11 is preferably formed between the holding surface 24 of the resin frame 2 and the optical sheet 3 when the back plate 6 is mounted as in FIG. 4.

Hereinafter, the action of the illuminating device 10 according to Embodiment 1 configured as above will be described.

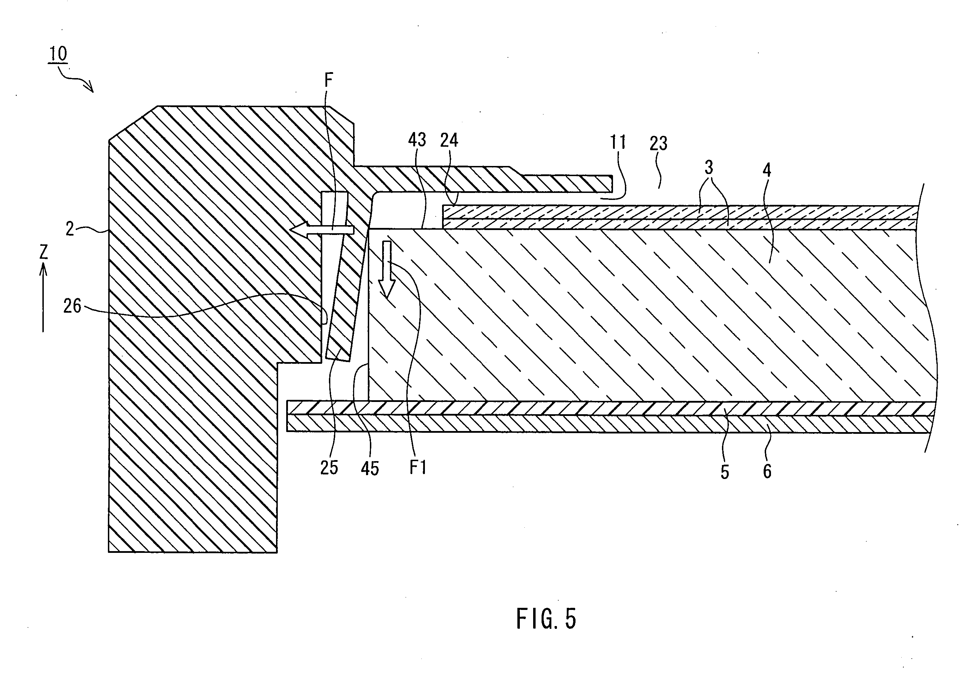

Depending on the environment in which the illuminating device 10 is used, the temperature and the humidity change in a variety of ways. Due to the difference in thermal expansion coefficient and humidity expansion coefficient between the material of the resin frame 2 and that of the light guide plate 4, the light guide plate 4 extends relative to the resin frame 2 in some cases depending on the temperature and humidity conditions. FIG. 5 is an enlarged cross-sectional view of the protrusion 25 and its adjacent portions when the light guide plate 4 is extended relatively. As can be seen, the contact surface 45 of the light guide plate 4 is in contact with the protrusion 25, and the protrusion 25 is elastically deformed towards the supporting wall 26. That is, when the light guide plate 4 extends relative to the resin frame 2 from the state in FIG. 4, the long side end surface 41b and the short side end surface 42b of the light guide plate 4 come into contact with the long side inner circumferential wall 21b and the short side inner circumferential wall 22b of the resin frame 2, respectively (see FIG. 1), and the contact surface 45 of the light guide plate 4 comes into contact with the protrusion 25 of the resin frame 2. When the light guide plate 4 further extends relatively, the protrusion 25 elastically deforms as being pressed by the contact surface 45 of the light guide plate 4 with a force F and absorbs the relative extension of the light guide plate 4 as shown in FIG. 5. Accordingly, unlike the light guide plate 104 shown in FIG. 8B, the light guide plate 4 does not become crinkled even when the light guide plate 4 extends. Thus, the luminance distribution of the illuminating device 10 is prevented from becoming uneven. Furthermore, for the liquid crystal display device 1 including the illuminating device 10, deterioration of the display quality due to the extension of the light guide plate 4 is prevented.

Since the protrusion 25 elastically deforms to absorb the extension of the light guide plate 4, virtually no change will be caused to the mechanical properties of the protrusion 25. Therefore, the above-mentioned effect can be achieved stably for the long term.

As a result of providing the protrusion 25 capable of absorbing the extension of the light guide plate 4, a clearance of 0 or near 0 can be set between the contact surface 45 of the light guide plate 4 and the protrusion 25 of the resin frame 2 for the case where the long side end surface 41b and the short side end surface 42b of the light guide plate 4 are in contact with the long side inner circumferential wall 21b and the short side inner circumferential wall 22b of the resin frame 2, respectively, under the temperature and humidity conditions in which the relative extension of the light guide plate 4 becomes the smallest. Thus, even if the illuminating device 10 undergoes acceleration, since the light guide plate 4 can hardly move relative to the resin frame 2 in the direction parallel to the emission surface 43, it is possible to prevent the occurrence of collision noise resulting from the collision between the two components.

Since the protrusion 25 faces the contact surface 45 provided at one corner portion of the rectangular light guide plate 4, it is possible to absorb the extension of the light guide plate 4 in both the long side direction and the short side direction by one protrusion 25 alone.

Next, the effect of providing the protrusion 25 upright on the holding surface 24 of the resin frame 2 will be described.

As shown in FIG. 5, when the protrusion 25 is inclined by being subjected to the force F from the contact surface 45 of the light guide plate 4, a component F1, which is a component of the reactive force to which the contact surface 45 of the light guide plate 4 is subjected from the inclined protrusion 25, parallel to the Z-axis is directed to the back plate 6. Since this reactive force component F1 acts so as to press the light guide plate 4 against the back plate 6, the clearance 11 between the holding surface 24 of the resin frame 2 and the optical sheet 3 is ensured. Thus, even when the optical sheet 3 extends in the direction perpendicular to the Z-axis due to changes in temperature and humidity, the periphery of the optical sheet 3 can move freely between the holding surface 24 of the resin frame 2 and the light guide plate 4.

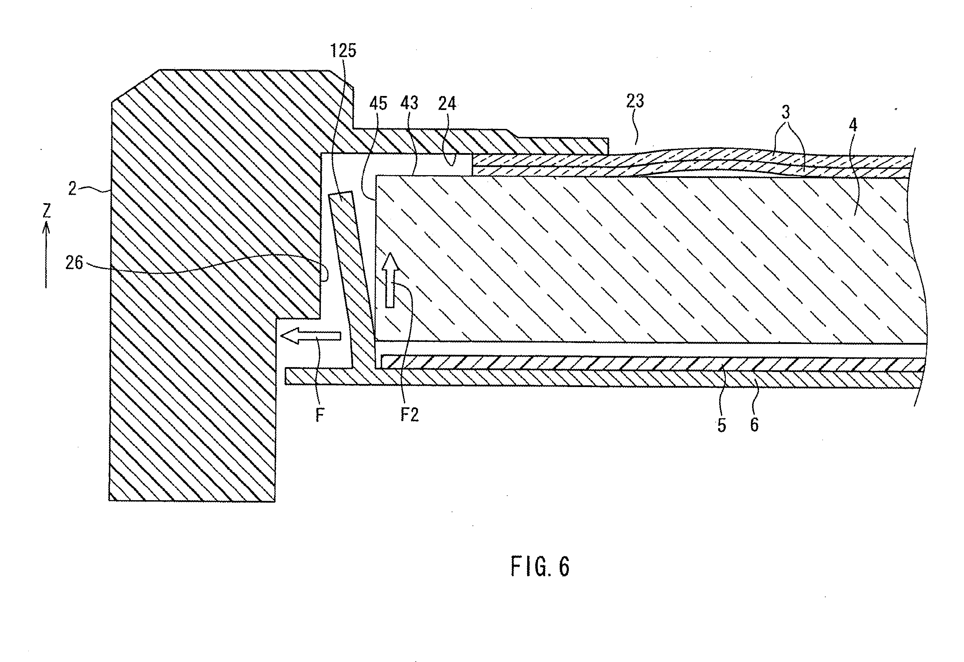

For comparison purposes, FIG. 6 shows a partially enlarged cross-sectional view showing, as in FIG. 5, the behavior of each portion when a protrusion 125 elastically deformable as the protrusion 25 is provided upright on the back plate 6. FIG. 6 is the same as FIG. 5 in that when the light guide plate 4 extends relative to the resin frame 2, the protrusion 125 elastically deforms as being pressed by the contact surface 45 of the light guide plate 4 with the force F and absorbs the extension of the light guide plate 4. FIG. 6 is different from FIG. 5 in that, a component F2, which is a component of the reactive force to which the contact surface 45 of the light guide plate 4 is subjected from the protrusion 125 inclined by being subjected to the force F, parallel to the Z-axis is directed to the holding surface 24 of the resin frame 2. Since the reactive force component F2 displaces the light guide plate 4 towards the holding surface 24 of the resin frame 2, the periphery of the optical sheet 3 are sandwiched between the light guide plate 4 and the holding surface 24. Thus, when the optical sheet 3 extends in the direction perpendicular to the Z-axis due to changes in temperature and humidity, the optical sheet 3 swells in a wavelike shape as shown in FIG. 6, and its flatness deteriorates. For this reason, the luminance of illumination light of the illuminating device becomes uneven.

In this way, by providing the protrusion 25 capable of absorbing the extension of the light guide plate 4 upright on the holding surface 24 of the resin frame 2, the periphery of the optical sheet 3 can move freely even when the light guide plate 4 extends. Thus, it is possible to prevent deterioration of flatness of the optical sheet 3 due to changes in the size of the optical sheet 3. Accordingly, it is possible to achieve an illuminating device capable of providing illumination light with consistently uniform luminance regardless of changes in temperature and humidity Consequently, deterioration of display quality of the liquid crystal display device 1 can be prevented.

The mechanical strength of the protrusion 25 is set such that even if the light guide plate 4 extends the light guide plate 4 does not become crinkled unlike the light guide plate 104 shown in FIG. 8B. Although the protrusion 25 can be designed freely so as to satisfy such a condition, it is preferable that, when the height of the protrusion 25 from the holding surface 24 is H and the largest thickness of the root portion of the protrusion 25 in the elastic deformation direction is T as shown in FIG. 4, T/H ≤ 0.3 is satisfied, and it is more preferable that T/H ≤ 0.25 is satisfied. The reason for focusing on the thickness of the "root portion" of the protrusion 25 is that, as can be seen from FIG. 5, primarily, the protrusion 25 elastically deforms at the root portion when the light guide plate 4 extends. Further, the reason for focusing on the largest thickness" in the direction in which the protrusion 25 elastically deforms is to take into account a case where the thickness of the protrusion 25 is not uniform in the vertical direction of the sheet of FIG. 4.

As a result of providing the protrusion 25 upright on the resin frame 2, the resin frame 2 including the protrusion 25 can be treated as a single component. Thus, there will be no substantial increase in the number of components of the illuminating device 10 and the number of man-hours needed to assemble the illuminating device 10. For this reason, there will be virtually no increase in the cost of the illuminating device 10.

The protrusion 25 can also be attached to the resin frame 2 after being produced as a separate component from the resin frame 2. However, integrally molding the entire resin frame 2 including the protrusion 25 by injection molding or the like allows easy production and further suppression of the cost increase.

Although the protrusion 25 shown in FIG. 4 has been provided upright parallel to the Z-axis, the present invention is not limited to this configuration. For example, the protrusion 25 may be inclined to the light guide plate 4 towards the front end (free end) of the protrusion 25. In this case, since the deformation range of the protrusion 25 can be extended, it is possible to deal with larger changes in the size of the light guide plate 4. Conversely, the protrusion 25 may be inclined away from the light guide plate 4 towards the front end (free end) of the protrusion 25. In this case, since the reactive force component F1 shown in FIG. 5 increases, it is possible to further prevent deterioration of flatness of the optical sheet 3 due to changes in the size of the optical sheet 3. Providing the protrusion 25 upright so as to be parallel to the Z-axis (the direction of the normal to the emission surface 43 of the light guide plate 4) enables to easily design a molding die used in molding the protrusion 25 integrally with the resin frame 2.

When the relative extension of the light guide plate 4 is large or the illuminating device 10 undergoes large acceleration, the deformed protrusion 25 comes into contact with the supporting wall 26 provided on the back side of the protrusion 25, so that the supporting wall 26 limits the deformation of the protrusion 25 and prevents the breakage of the protrusion 25. The clearance between the protrusion 25 and the supporting wall 26 can be set with consideration given to the allowable deformation range of the protrusion 25. Of course, the supporting wall 26 may not be provided.

### (Embodiment 2)

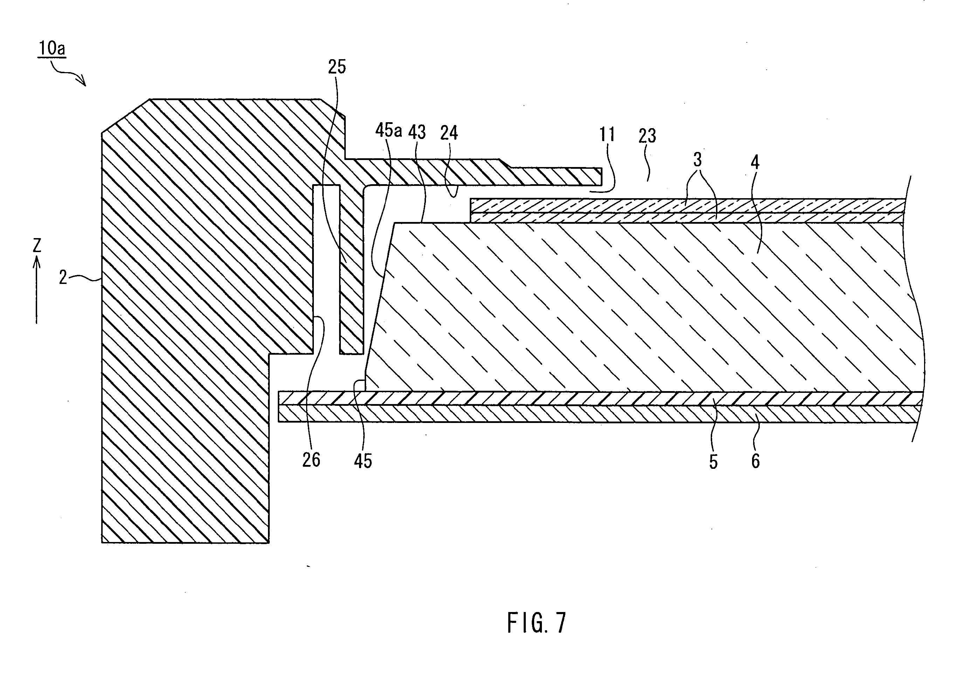

FIG. 7 is a partially enlarged cross-sectional view of an illuminating device 10a according to Embodiment 2 of the present invention along the surface parallel to the thickness direction. In Embodiment 2, an inclined surface 45a is formed on the contact surface 45 of the light guide plate 4 facing the protrusion 25. Other configurations are the same as those in Embodiment 1 and the same components as in Embodiment 1 are denoted by the same reference numerals and the description thereof will not be repeated.

The inclined surface 45a is inclined backward in the thickness direction (Z-axis direction) of the light guide plate 4 (i.e., away from the protrusion 25) towards the emission surface 43. The inclined surface 45a is adjacent to the emission surface 43. As a result of forming such an inclined surface 45a on the contact surface 45, when the protrusion 25 is inclined by being subjected to the force F from the light guide plate 4 due to the extension of the light guide plate 4, the magnitude of the reactive force component F1 (see FIG. 5) to which the light guide plate 4 is subjected from the inclined protrusion 25 increases. Thus, in comparison with Embodiment 1, the flexibility in movement of the periphery of the optical sheet 3 at the time of extension of the light guide plate 4 further improves. Therefore, it is possible to further prevent deterioration of flatness of the optical sheet 3 due to changes in temperature and humidity.

In FIG.7, although the inclined surface 45a is formed only partially on the area of the contact surface 45 in the Z-axis direction, the inclined surface 45a may be formed on the entire area of the contact surface 45.

Further, the inclined surface 45a need not be a flat surface, and may be any of various curved surfaces, such as a cylindrical surface and a spherical surface, or a combination of a flat surface and a curved surface.

In Embodiments 1 and 2 above, the present invention has been described only by way of example. Thus, the present invention is not limited to these embodiments and a variety of modifications can be made.

For example, in Embodiments 1 and 2 above, the protrusion 25 capable of absorbing the relative extension of the light guide plate 4 is provided at one corner portion of the substantially rectangular resin frame 2, but the arrangement of the protrusion is not limited to this. For example, the protrusions 25 may be placed at two or more of the four corner portions of the resin frame 2, respectively, In this case, the contact surfaces 45 are preferably provided at the corner portions of the light guide plate 4 corresponding to the locations where the protrusions are placed. Or, in order to absorb the extension of the light guide plate 4 in the long side direction, one or more protrusions may be provided so as to face each of or one of the short side end surface 42a, 42b of the light guide plate 4. Additionally, or alternatively, in order to absorb the extension of the light guide plate 4 in the short side direction, one or more protrusions may be provided so as to face each of or one of the long side end surfaces 41a, 41b of the light guide plate 4.

Unlike in Embodiments 1 and 2 above, the protrusion 25 need not be plate-shaped and any shape, such as, for example, a stick shape, can be selected. Further, the surface need not be flat, and any shape such as bumps and dips may be provided on the surface.

In Embodiments 1 and 2 above, the light source 7 has been disposed to face the short side end surface of the light guide plate 4, the light source may be disposed to face a long side end surface of the light guide plate or light sources may be disposed to face end surfaces along two opposing sides of the light guide plate, respectively.

The illuminating device of the present invention can be used in applications other than as a backlight device for a transmission type liquid crystal display device as in Embodiments 1 and 2 above. For example, the illuminating device can be applied to an X illuminator used to irradiate x-ray radiographs with light, a light box that irradiates negative images or the like with light to make them more visually identifiable or an illuminating device for illuminating a variety of billboards, ads, guide signs and the like placed indoors or outdoors. Depending on the use of the illuminating device, the configuration of each component of the illuminating device can be changed as needed.

As long as the display device of the present invention includes the illuminating device of the present invention, it may not include a liquid crystal panel. The display device may be for displaying either moving images or still images.

### Industrial Applicability

Although the application fields of the present invention are not particularly limited, it can be preferably used in, in particular, applications where a light guide plate having a large area is required, for example, in a large-screen liquid crystal display device.

### Description of Reference Numerals

- 1: liquid crystal display device
- 2: resin frame
- 21a, 21b: long side inner circumferential wall
- 22a, 22b: short side inner circumferential wall
- 23: opening
- 24: holding surface
- 25: protrusion
- 26: supporting wall
- 3: optical sheet
- 4: light guide plate
- 41a, 41b: long side end surface
- 42 a, 42b: short side end surface
- 45: contact surface
- 45a: inclined surface
- 5: reflection sheet
- 6: back plate
- 7: light source
- 8: liquid crystal panel
- 9: display frame
- 10, 10a: illuminating device
- 11: clearance

## Claims

1. An illuminating device comprising:
a light source;
a light guide plate having an incident surface to which light from the light source is incident and an emission surface from which the light incident to the incident surface is emitted
a resin frame disposed on the emission surface side of the light guide plate and including an opening through which the light emitted from the emission surface passes and
at least one optical sheet disposed between the light guide plate and the resin frame,
wherein a protrusion facing an end surface of the light guide plate adjacent to the emission surface is provided upright on the resin frame, and
the protrusion is elastically deformable towards an opposite side to the light guide plate.

2. The illuminating device according to claim 1, wherein the protrusion is molded integrally with the resin frame.

3. The illuminating device according to claim 1 or 2, wherein the protrusion is provided upright parallel to a direction of a normal to the emission surface of the light guide plate.

4. The illuminating device according to any one of claims 1 to 3, wherein when a height of the protrusion is H and the largest thickness of a root portion of the protrusion in the elastic deformation direction is T, T/H ≤ 0.3 is satisfied.

5. The illuminating device according to any one of claims 1 to 4, wherein a supporting wall for limiting deformation of the protrusion is formed on an opposite side to the light guide plate relative to the protrusion.

6. The illuminating device according to any one of claims 1 to 5, wherein an inclined surface inclined backward in the thickness direction of the light guide plate towards the emission surface is formed on a part of the end surface of the light guide plate where the protrusion faces.

7. A display device comprising the illuminating device according to any one of claims 1 to 6.
